# EUROPEAN PATENT APPLICATION

(11) **EP 1 712 558 A1**
(43) Date of publication of application: **18.10.2006**
(21) Application number: 05704414.1
(22) Date of filing: 31.01.2005
(51) Int. Cl.: C07K 1/24, C07K 14/79, A23J 1/20, A23J 3/08, B01D 61/46, C02F 1/46

(54) **METHOD FOR SEPARATING/REFINING CATIONIC PROTEIN**

(30) Priority: 03.02.2004 JP 2004026689
(71) Applicant: KURUME UNIVERSITY, Kurume-shi, Fukuoka 830-0011 (JP)
(72) Inventor: INOUE, Hiroyoshi, Kurume-shi, Fukuoka 8300017 (JP)
(74) Representative: Koepe, Gerd L.
(86) International application number: PCT/JP2005/001732
(87) International publication number: WO 2005/075500

(57) **Abstract**

The method of the present invention for separating and purifying a cationic protein is performed by using an electrodialysis apparatus. The electrodialysis apparatus used herein includes an electrodialysis bath having an anode and a cathode. The electrodialysis bath includes an anode compartment, a raw material loading compartment, a concentration compartment, and a cathode compartment in this order from the anode side. The anode compartment and the raw material loading compartment are divided from each other by a porous membrane made of a polymer having an anion exchange group, the raw material loading compartment and the concentration compartment are divided from each other by a porous membrane made of a polymer having a cation exchange group, and the concentration compartment and the cathode compartment are divided from each other by a microporous membrane. The method of the present invention includes the steps of, in this electrodialysis apparatus, (1) loading a cationic protein-containing aqueous solution into the raw material loading compartment and loading an electrolytic solution into the anode compartment, the concentration compartment, and the cathode compartment, (2) applying a current to the electrodialysis apparatus, and (3) collecting a solution containing a cationic protein from the concentration compartment.

## Description

### Technical Field

The present invention relates to methods for separating and purifying cationic proteins, in particular, lactoferrin.

### Background Art

Lactoferrin is an iron-binding glycoprotein having an approximate molecular weight of 80,000, and has been binding two atoms of iron per molecule. Lactoferrin is found in bodily fluids of many mammals, for example, in milk. In particular, it is known that the colostrum contains 5 to 10 g/L of lactoferrin, accounting for 30% to 70% of the total proteins contained in colostrum. Lactoferrin is an important protein for infant health and growth. Also, it was recently found that lactoferrin has an antimicrobial action and an antibacterial action. Thus, lactoferrin has been utilized in various fields, including the food industry.

Lactoferrin is generally extracted from colostrum, normal milk, cheese whey (a residue generated in the process of producing cheese), and the like (see Mamoru Tomita, MRC News, 21, 1998, p. 247 and Mamoru Tomita, Foods Food Ingredients J. Jpn, No. 181, 1999, pp. 33-41, for example). In cheese whey at about pH 6, lactoferrin is cationic, while most of other proteins are anionic, and thus the difference in this property has been utilized for extraction. For example, Mamoru Tomita, MRC News, 21, 1998, p. 247 describes a process of bringing whey into contact with a cation exchange resin to allow lactoferrin to be adsorbed to the cation exchange resin, washing the resin with a high-concentration salt solution to desorb lactoferrin, and then desalting the desorbed liquid containing lactoferrin by ultrafiltration to obtain a lactoferrin concentrate. However, this method includes a lot of steps and is therefore not efficient. Furthermore, operations such as regeneration of the ion exchange resin are complicated.

Various other methods for separating and purifying lactoferrin have also been investigated. For example, Clovis K. Chiu and Mark R. Etzel, Journal of Food Science, vol. 62, No. 5, 1997, pp. 996-1001 describes a method for separating lactoferrin from cheese whey by a simple diffusion method using a cation exchange membrane made of cellulose. However, this method takes long time for separation and is therefore not efficient. Moreover, a separation method by electrophoresis (Hurly WL et al., J Dairy Sci, Vol. 76, 1993, p. 377), a separation method by affinity chromatograph (M. K. Walsh and S. H. Nam, Prep. Biochem. Biotechnol., Vol. 31, No. 3, 2001, pp. 229-240), a separation method by capillary electrophoresis (Peter Riechel et al., Journal of Chromatography A, Vol. 817, 1998, pp. 187-193), and other methods have also been studied. However, all of these methods are for separating and purifying small amounts of lactoferrin on a laboratory scale and have not yet been put to practical use.

### Disclosure of Invention

It is an object of the present invention to provide a method for separating and purifying a cationic protein such as lactoferrin in a simple manner without denaturation.

The present invention provides a method for separating and purifying a cationic protein using an electrodialysis apparatus, wherein the electrodialysis apparatus includes an electrodialysis bath having an anode and a cathode, and the electrodialysis bath includes an anode compartment, a raw material loading compartment, a concentration compartment, and a cathode compartment in this order from the anode side, wherein the anode compartment and the raw material loading compartment are divided from each other by a porous membrane made of a polymer having an anion exchange group, the raw material loading compartment and the concentration compartment are divided from each other by a porous membrane made of a polymer having a cation exchange group, and the concentration compartment and the cathode compartment are divided from each other by a microporous membrane, and wherein the method includes the steps of (1) loading a cationic protein-containing aqueous solution into the raw material loading compartment and loading an electrolytic solution into the anode compartment, the concentration compartment, and the cathode compartment, (2) applying a current to the electrodialysis apparatus, and (3) collecting a solution containing a cationic protein from the concentration compartment.

In a preferred embodiment, the cationic protein is lactoferrin.

In a preferred embodiment, the current has a current density of 0.1 to 50 mA/cm².

In a preferred embodiment, in the step (1), an anion exchanger or a chelating agent is further added to the raw material loading compartment.

In a preferred embodiment, a face on the raw material loading compartment side of the cation exchange membrane is coated with an anion exchange membrane.

According to the present invention, a cationic protein, in particular, lactoferrin can be separated and purified in a simple manner without denaturation of the protein only with the step of performing electrodialysis.

### Brief Description of Drawings

Fig. 1 is a schematic diagram of an electrodialysis bath in an electrodialysis apparatus used in the present invention.
Fig. 2 is a photograph of SDS-polyacrylamide gel electrophoresis for various solutions.
Fig. 3 is a schematic diagram of the electrodialysis apparatus in Example 3, which is equipped with cation exchange membranes.
Fig. 4 is a graph showing a relationship between the difference between a whey flow rate and a lactoferrin concentrated phase flow rate and the yield or purity of lactoferrin obtained.
Fig. 5 shows HPLC elution patterns of a crude whey and a lactoferrin concentrated phase obtained by a treatment with a flow rate difference (the whey flow rate - the lactoferrin concentrated phase flow rate) of -5 mL/minute.

### Best Mode for Carrying Out the Invention

### (The principle of the method of the present invention for separating and purifying cationic protein)

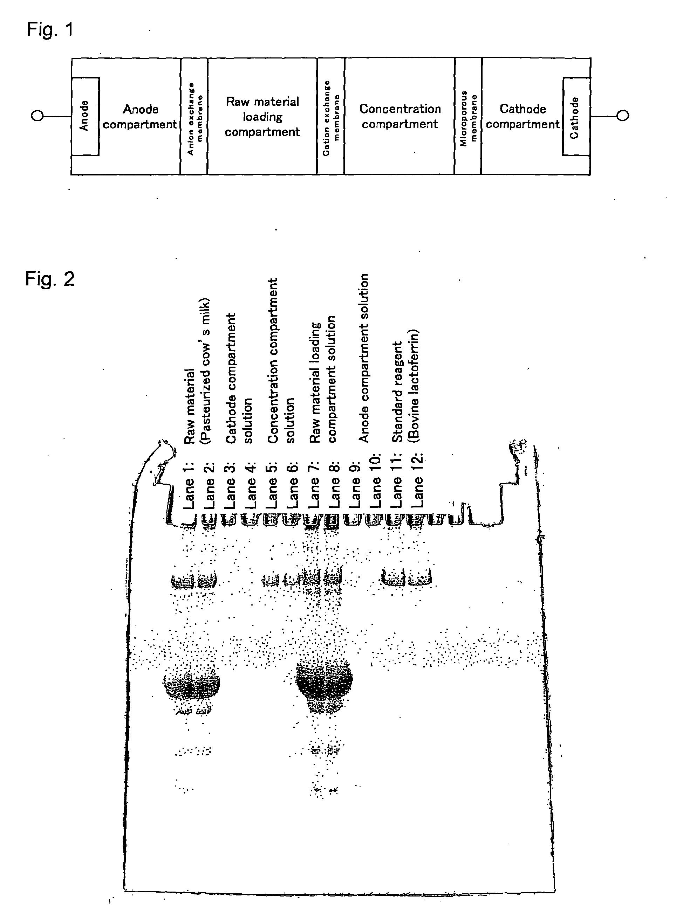

The method of the present invention for separating and purifying a cationic protein is performed by using a particular electrodialysis apparatus. This electrodialysis apparatus is provided with an electrodialysis bath as shown in Fig. 1, for example. The electrodialysis bath is provided with an anode compartment, a raw material loading compartment, a concentration compartment, and a cathode compartment. The anode compartment and the raw material loading compartment are divided from each other by a porous membrane made of a polymer having an anion exchange group (hereinafter sometimes referred to as "anion exchange membrane"), the raw material loading compartment and the concentration compartment are divided from each other by a porous membrane made of a polymer having a cation exchange group (hereinafter sometimes referred to as "cation exchange membrane"), and the concentration compartment and the cathode compartment are divided from each other by a microporous membrane. In the method of the present invention, a cationic protein-containing aqueous solution is loaded into the raw material loading compartment of this electrodialysis apparatus, and an electrolytic solution is loaded into the anode compartment, the concentration compartment, and the cathode compartment, and thereafter, a current is applied between the electrodes. Thus, cationic proteins and cations (metal ions) in the raw material loading compartment permeate the cation exchange membrane and transfer to the concentration compartment, while anionic proteins and anions permeate the anion exchange membrane and transfer to the anode compartment. Furthermore, of the cationic proteins and the cations that have transferred to the concentration compartment, only the cations and cationic proteins having a small molecular size permeate the microporous membrane and transfer to the cathode compartment. At this time, the objective cationic protein, which has a large molecular size, cannot permeate the microporous membrane. Consequently, the objective cationic protein is concentrated in the concentration compartment.

### (Cationic protein-containing aqueous solution)

The cationic protein that can be separated and purified by the method of the present invention is a protein that is cationic in an aqueous solution at a predetermined pH. In the present invention, a cationic protein having a high isoelectric point is preferable. Examples of proteins that are cationic at pH 7 include lactoferrin, lactoperoxidase, pyruvate kinase, aldolase, hemoglobin, 3-phosphoglycerate phosphokinase, chymotrypsin A, trypsinogen, myoglobin, lysozyme, and cytochrome. Lactoferrin is preferable.

There is no particular limitation on the cationic protein-containing aqueous solution used in the present invention, as long as the cationic protein-containing aqueous solution contains a cationic protein as described above. For example, aqueous solutions containing lactoferrin include secretions of mammals such as milk (e.g., cow's milk); processed milk products such as defatted milk and whey; and culture solutions or disrupted cell supernatants of microorganisms (including lactoferrin recombinant bacteria) or cells. Bovine milk and whey are preferable because they contain a large amount of lactoferrin and are easily available, and whey is more preferable in terms of recycling of waste.

The pH of the above-described cationic protein-containing aqueous solution can be adjusted as appropriate to not more than the isoelectric point of a cationic protein to be separated and purified so that the protein can be cationic. For example, to separate and purify lactoferrin, the pH of the aqueous solution is usually 7.5 or less, preferably 2 to 7.5, more preferably 5 to 7. For example, separating and purifying lactoferrin from whey is advantageous in that pH adjustment of the aqueous solution is not required because the pH of whey is about 6. The pH can be adjusted by adding a pH regulator commonly used by those skilled in the art, such as an aqueous solution of sodium hydroxide, dilute hydrochloric acid, phosphoric acid, acetic acid, succinic acid, and citric acid.

A salt concentration of the above-described cationic protein-containing aqueous solution depends on the aqueous solution, and is preferably 0.01 wt% to 5 wt%, more preferably 0.01 wt% to 1 wt%, usually as the ash content in the aqueous solution. For example, fresh whey has an ash content of 0.4 wt% to 0.5 wt%, which may include 0.03 to 0.05 wt% of sodium, 0.12 to 0.16 wt% of potassium, 0.02 to 0.03 wt% of magnesium, and 0.03 to 0.05 wt% of phosphorous. Raw milk has an ash content of about 0.7 wt%, which may include about 0.05 wt% of sodium, about 0.15 wt% of potassium, about 0.01 wt% of magnesium, and about 0.09 wt% of phosphorous. A high salt concentration is preferred for efficient separation of the cationic protein, whereas a low salt concentration is preferred for the subsequent step, i.e., a desalting treatment.

There is no particular limitation on the concentration of the cationic protein in the cationic protein-containing aqueous solution. For example, whey usually contains lactoferrin in an amount of about 100 mg/L.

### (Electrodialysis apparatus)

The electrodialysis apparatus used in the present invention is provided with an electrodialysis bath having an anode and a cathode. The electrodialysis bath is provided with an anode compartment, a raw material loading compartment, a concentration compartment, and a cathode compartment in this order from the anode side. The anode compartment and the raw material loading compartment are divided from each other by a porous membrane made of a polymer having an anion exchange group (anion exchange membrane), the raw material loading compartment and the concentration compartment are divided from each other by a porous membrane made of a polymer having a cation exchange group (cation exchange membrane), and the concentration compartment and the cathode compartment are divided from each other by a microporous membrane.

The porous membrane made of a polymer having an anion exchange group (anion exchange membrane) is a porous membrane that is made of a polymer having an anion exchange group and that has the function of selectively allowing anions to permeate. There is no particular limitation on the anion exchange group in a polymer. For example, strongly basic anion exchange membranes made of a polymer having an ammonium group, a sulfonium group, a phosphonium group, or the like and weakly basic anion exchange membranes made of a polymer having a primary to tertiary amino group can be used. Numerous such anion exchange membranes are commercially available and can be obtained easily.

There is no particular limitation on the pore diameter of the anion exchange membrane. The pore diameter can be determined as appropriate according to the size of a main anionic protein contained so that the main anionic protein can permeate the membrane. The pore diameter is usually 0.1 nm to 1 nm.

The porous membrane made of a polymer having a cation exchange group (cation exchange membrane) is a porous membrane that is made of a polymer having a cation exchange group and that has the function of selectively allowing cations to permeate. There is no particular limitation on the cation exchange group in a polymer. For example, strongly acidic cation exchange membranes made of a polymer having a cation exchange group such as a sulfonic acid group, a phosphonic acid group, a sulfate ester group, or a phosphate ester group and weakly acidic cation exchange membranes made of a polymer having a cation exchange group such as a carboxylic acid group or a phenolic hydroxyl group can be used. Furthermore, there is also no particular limitation on the type of the membrane, and, for example, filter paper membranes, petroleum-based polymer membranes (polyvinyl alcohol membranes), and nonwoven fabric can be used.

The pore diameter of the cation exchange membrane can be determined as appropriate according to the size of the objective cationic protein and the type of the membrane. For example, when the cationic protein is lactoferrin, the pore diameter is usually about 0.1 µm to 50 µm. In particular, when a filter paper membrane is used as the cation exchange membrane, the pore diameter is preferably about 1 µm to about 5 µm. There is also no limitation on the thickness and the exchange capacity of the cation exchange membrane. The thickness is usually about 20 µm to 2 mm. Preferred exchange capacity is, for example, about 0.1 meq/g dry membrane to 0.5 meq/g dry membrane in the case of a filter paper membrane, and about 0.1 meq/g dry membrane to 4 meq/g dry membrane in the case of a petroleum-based polymer membrane. In the case of a polyvinyl alcohol membrane, the exchange capacity can be expressed on a per wet membrane basis because the membrane has a high moisture content, and is preferably about 0.5 meq/g wet membrane to 2.0 meq/g wet membrane. In the case of a nonwoven fabric, the exchange capacity is about 2 meq/g dry membrane to 4 meq/g dry membrane. Moreover, a stack of a plurality of cation exchange membranes can be used, if necessary.

Numerous cation exchange membranes have been reported, and can be obtained easily. Examples thereof include a nonwoven fabric manufactured using IEF-SC (sulfonic acid type) or IEF-WC (carboxylic acid type) from Nitivy Company Limited or the like, and an ion exchange membrane (RX-1; Toray) manufactured by shaping an ion exchange fiber into the form of a filter paper. Alternatively, the cation exchange membrane also can be obtained by a papermaking method (wet process) and a cast method. A cation exchange membrane obtained by the cast method is preferable in that the membrane is made of a polymer having many exchange groups, whereas a cation exchange membrane obtained by the papermaking method is preferable in that the membrane has high durability.

The papermaking method is performed, for example, by dispersing a membrane material made of a polymer having a cation exchange group in water and then spreading this membrane material over a support.

Examples of the membrane material include cellulose such as high-purity highly-crystalline cellulose (the solid structure thereof may be any of the solid structures of polycrystalline celluloses I to IV), chitin, and chitosan. Furthermore, bleached chemical pulp (long-fiber pulp) in which cellulose fibers are bundled, cotton linter pulp, and the like can also be used. Cellulose and long-fiber pulp are preferable.

As the support, a network support having about 50 to 400 meshes is generally used. As for the material of the support, for example, any of organic fiber, inorganic fiber, and metallic fiber can be used.

Examples of the organic fiber include rayon, cuprammonium rayon, acetate fiber, vinylon, nylon, vinylidene, polyvinyl chloride, polyester, acrylic fiber, polyethylene, polypropylene, and polychlal fiber. Nylon is preferably used. Examples of the inorganic fiber include glass fiber, quartz fiber, silica-alumina fiber, rock wool, calcium phosphate fiber, Tyranno fibers®, silica fiber, silicon carbide fiber, alumina fiber, zirconia fiber, activated carbon fiber, carbon fiber, vapor grown carbon fiber, silicon carbide whisker, silicon nitride whisker, alumina whisker, graphite whisker, potassium titanate fiber, gypsum whisker, phosphate whisker, magnesium whisker, magnesium oxysulfate, magnesium pyroborate, asbestos, and wollastonite. Examples of the metallic fiber include stainless steel fiber, aluminum fiber, Al-Mg fiber, and Al-Si fiber. A ceramic membrane, a stainless steel-based titanium membrane, and the like can be used in view of the high mechanical strength.

The cast method is performed, for example, by pouring a polymer into a cast plate or the like to shape the polymer into the form of a membrane and then introducing a cation exchange group into the polymer by crosslinking.

In the cast method, an example of the polymer serving as the membrane material is polyvinyl alcohol (PVA). In order to improve the membrane durability, a fluorine-containing polymer having good heat resistance and oxidation resistance can be preferably used.

One of the faces of the cation exchange membrane may be precoated with an anion exchange membrane. When this precoated face is placed on the raw material loading compartment side in the electrodialysis bath, it becomes more difficult for the cations (metal ions) in the aqueous solution to pass through the membrane than for the cationic proteins, and therefore the purifying efficiency can be increased. Furthermore, it is possible to prevent deterioration of the membrane by exchanging the coating, thereby preventing the current efficiency from decreasing. Coating can be performed by attaching an anion exchange membrane onto the surface of the cation exchange membrane or by applying a solution containing a high molecular substance having an anion exchange group thereto.

There is no particular limitation on the microporous membrane, as long as the microporous membrane is a membrane having a pore diameter that does not allow the objective cationic protein to permeate and that allows the cations (metal ions) or proteins having a smaller molecular size to permeate. Examples of such a microporous membrane include an ultrafiltration membrane and a microporous cation exchange membrane. The pore diameter is usually 2 nm to 200 nm, preferably 2 nm to 20 nm.

As described above, the electrodialysis apparatus used in the present invention is provided with an electrodialysis bath, wherein the electrodialysis bath is constituted by an anode compartment, a raw material loading compartment, a concentration compartment, and a cathode compartment in this order from the anode side, and the anode compartment and the raw material loading compartment are divided from each other by a porous membrane made of a polymer having an anion exchange group, the raw material loading compartment and the concentration compartment are divided from each other by a porous membrane made of a polymer having a cation exchange group, and the concentration compartment and the cathode compartment are divided from each other by a microporous membrane. The size of the electrodialysis bath can be determined as appropriate according to the amount of the raw material to be treated, and is not particularly limited. There is no particular limitation on the material of the electrodialysis bath. Usually, acryl, stainless steel, and other materials can be used.

### (Electrolytic solution)

There is no particular limitation on the electrolytic solution, as long as the electrolytic solution is an aqueous solution of any of electrolytes commonly used by those skilled in the art, such as sodium chloride, potassium chloride, calcium chloride, sodium hydroxide, and potassium hydroxide. Also, there is no limitation on the concentration of the electrolytic solution. Preferably, the concentration is 1 × 10⁻³ mol/dm³ to 1 mol/dm³. A higher electrolyte concentration will result in a better current efficiency, but the resultant purified cationic protein product will contain a salt, so that care should be taken. The pH of the electrolytic solution is preferably 2 to 8.

### (Anion exchanger and chelating agent)

In the method of the present invention, an anion exchanger or a chelating agent may be used, if necessary. More specifically, the anion exchanger or the chelating agent is added to the raw material loading compartment. When an anion exchanger is added, adherence of the anionic proteins to the membrane can be prevented because the anionic proteins and the anions are adsorbed to the anion exchanger, and also the current efficiency can be kept high because the anions are exchanged. There is no particular limitation on the anion exchanger, as long as the anion exchanger is a substance having anion exchange properties, which is commonly used by those skilled in the art. Examples thereof include anion exchange resin particles made of a polymer having an anion exchange group as described above, anion exchange cellulose, and anion exchange ceramics. When a chelating agent is added, the cations (metal ions) are adsorbed to the chelating agent, so that the cations (metal ions) in the cationic protein-containing aqueous solution are reduced, and the membrane permeation efficiency of the cationic proteins is increased. Examples of the chelating agent include polyaminocarboxylic salts such as EDTA, hydroxycarboxylic acids such as citric acid and condensed phosphates thereof, polymeric chelating agents, and complexes of these.

### (Method for separating and purifying cationic protein)

In the method of the present invention for separating and purifying a cationic protein, firstly, the cationic protein-containing aqueous solution is loaded into the raw material loading compartment of the electrodialysis bath, and the electrolytic solution is loaded into the anode compartment, the concentration compartment, and the cathode compartment. The same electrolytic solution or different electrolytic solutions can be loaded into the anode compartment, the concentration compartment, and the cathode compartment. The amounts of the cationic protein and electrolytic solutions are not particularly limited and can be determined according to the size of the electrodialysis bath. At this time, the above-described anion exchanger or chelating agent may be loaded. There is no particular limitation on the amount of the anion exchanger or chelating agent to be loaded. Usually, the anion exchanger or chelating agent can be loaded at a ratio of 1 part by weight to 5 parts by weight with respect to 100 parts by weight of the cationic protein-containing aqueous solution.

Then, a current is applied to the electrodialysis bath. The current density of the current to be applied is not particularly limited and can be determined according to the size of the electrodialysis bath, for example. In order to separate and purify the cationic protein without denaturation, it is preferable that the current density of the current to be applied is not too high. For example, the current density is 0.1 to 50 mA/cm². There is no particular limitation on the other electrodialysis conditions. For example, the temperature of the solution usually can be maintained at 4°C to 60°C, preferably at room temperature.

By applying a current to the electrodialysis bath as described above, the objective cationic protein and the cations (metal ions) that are present in the raw material loading compartment permeate the cation exchange membrane and transfer to the concentration compartment. On the other hand, the anionic proteins and the anions permeate the anion exchange membrane and transfer to the anode compartment. Among the cationic proteins and the cations that have transferred to the concentration compartment, cationic proteins having a small molecular size and the cations permeate the microporous membrane and transfer to molecular size larger than the pore diameter of the microporous membrane are concentrated in the concentration compartment. In this manner, in the method of the present invention, the objective cationic protein, preferably lactoferrin, can be separated and purified in a simple manner without denaturation only with the step of performing electrodialysis.

The thus obtained solution containing the cationic protein in the concentration compartment may be further treated by a method commonly used by those skilled in the art. For example, when the cationic protein is lactoferrin, apolactoferrin obtained by releasing iron from lactoferrin has an antimicrobial action. Therefore, in order to release iron from lactoferrin contained in the solution, the pH of the collected solution is preferably adjusted to 1 to 3. As the pH regulator, for example, hydrochloric acid, phosphoric acid, phthalic acid, and glycine can be used. Alternatively, the solution can be subjected to an additional purifying treatment by a method commonly used by those skilled in the art.

The above-described solution in the concentration compartment contains the objective cationic protein at a high ratio. For example, when lactoferrin is extracted from whey using the above-described electrodialysis apparatus, the ratio of lactoferrin in the total proteins contained in the above-described solution in the concentration compartment is very high, and preferably 70 wt% or more, more preferably 95 wt% or more of the total proteins. It should be noted that lactoferrin can be measured by an immunochemical method by an anti-lactoferrin antibody, HPLC, SDS-PAGE, and other methods. The cationic protein contained in the above-described solution in the concentration compartment can be processed into a formulation through concentration, drying, pulverization, and other treatments commonly used by those skilled in the art.

The cationic protein obtained by the method of the present invention can be used in various fields as a raw material of food products, pharmaceuticals, and cosmetics.

### Examples

### (Production Example 1: Production of cation exchange membrane)

First, 20 g of a long-fiber pulp and 200 g of chloroacetyl chloride were mixed together, and 4 g of triethylamine were further added to this mixture. The resultant mixture was refluxed at 80°C for 12 hours. Then, the reaction mixture (containing the long-fiber pulp in which a part of a hydroxyl group has been chloroacetylated) was mixed with concentrated sulfuric acid in a volume ratio of 25:1, and the resultant mixture was maintained at 30°C for 12 hours under refluxing to sulfonate the acetyl group. The obtained long-fiber pulp having a sulfone group is collected and washed with an ethanol/methanol (1:1 by volume ratio) mixture, hydrochloric acid, and water. After washing, the long-fiber pulp was beaten so that the fibers were sufficiently entangled, dispersed in water, and spread over a 100-mesh nylon to shape into the form of a filter paper. The obtained filter paper-like product made of the pulp having the sulfone group was sandwiched between nonwoven fabrics, and pressed with a roller. Then, free water in the product was removed in an oven at 60°C, and thus a cation exchange membrane (filter paper membrane) was obtained. This cation exchange membrane had a pore diameter of 1 µm to 5 µm, a thickness of 0.3 mm, and an exchange capacity of 0.28 meq/g dry membrane. As for the pore diameter, the maximum particle size was used by examining particles under a microscope, among particles having various particle sizes that could permeate the obtained filter paper membrane.

### (Production Example 2: Production of cation exchange membrane)

First, 3.5 g of polyvinyl alcohol (PVA) and 0.19 g of 2-aminopyridine (2-AP) were added to 50 mL of deionized water, and the mixture was stirred under heating at 90°C for 90 minutes to dissolve PVA. Then, this PVA solution was cooled sufficiently, poured into a cast plate, and dried on a hot plate at 50°C for about 6 hours. The resultant PVA membrane was dipped in a 2 N sodium chloride aqueous solution, and maintained at 25°C for 24 hours. Separately, a 2 N sodium chloride aqueous solution was added to 0.8 mL of glutaraldehyde (GA) and 1.73 mL of an 11.6 N hydrochloric acid aqueous solution so that the total volume was 200 mL, and thus a GA solution was prepared. The above-described PVA membrane after dipping was transferred to and dipped in this GA solution, and maintained at 25°C for 24 hours. Furthermore, the PVA membrane was dipped in deionized water, and maintained for 5 days or more with daily exchange of deionized water. The thus obtained cation exchange membrane had a thickness of 0.4 to 0.8 mm and an exchange capacity of 0.5 meq/g wet membrane to 2 meq/g wet membrane.

### (Example 1)

An electrodialysis apparatus was prepared in the following manner. First, an electrodialysis apparatus made of an acrylic resin was produced, and the interior of the electrodialysis apparatus was partitioned so that it was constituted by an anode compartment, a raw material loading compartment, a concentration compartment, and a cathode compartment in this order from the anode side. That is to say, the anode compartment and the raw material loading compartment were divided from each other by an anion exchange membrane (AM-1, Tokuyama Corporation), the raw material loading compartment and the concentration compartment were divided from each other by the cation exchange membrane obtained in Production Example 1, and the concentration compartment and the cathode compartment were divided from each other by a microporous cation exchange membrane (CM-1, Tokuyama Corporation).

Bovine lactoferrin (Sigma) was dissolved in a pasteurized cow's milk (40 g) so that the concentration was 100 µg/g. The lactoferrin-containing milk was loaded into the raw material loading compartment of the above-described electrodialysis apparatus, while a 0.1 M NaCl aqueous solution at pH 7 was loaded into the anode compartment, the concentration compartment, and the cathode compartment. Then, a current of 1 mA/cm² was applied to the electrodialysis apparatus for 20 minutes. After application of the current, solutions in the anode compartment, the raw material loading compartment, the concentration compartment, and the cathode compartment were collected and taken as an anode compartment solution, a raw material loading compartment solution, a concentration compartment solution, and a cathode compartment solution, respectively.

Then, SDS-PAGE was conducted under a nonreducing condition to confirm lactoferrin in the above-described solutions of the respective compartments. The obtained solution of each compartment was injected in volumes of 10 µL into corresponding two lanes (Lanes 3 and 4: cathode compartment solution, Lanes 5 and 6: concentration compartment solution, Lanes 7 and 8: raw material loading compartment solution, and Lanes 9 and 10: anode compartment solution). For comparison, an aqueous solution containing 10 µg/mL of bovine lactoferrin (Lanes 1 and 2) and the pasteurized milk, i.e., the raw material, (Lanes 11 and 12) were injected in volumes of 5 µL each (1/2 the volume for the above-described solutions). The results are shown in Fig. 2.

As shown in Fig. 2, a lactoferrin band and other protein bands were detected in the pasteurized milk, i.e., the raw material, whereas only the lactoferrin band was detected in the concentration compartment solution. The lactoferrin band was not detected in the cases of the solution of the anode compartment and the solution of the cathode compartment. These facts indicate that a cationic protein can be separated and purified by using the above-described electrodialysis apparatus.

Furthermore, 50 µL each of a solution containing 5 mM NTA (nitrilotriacetate) and a solution containing 5 mM FeCl₃ were added to 10 mL of the obtained concentration compartment solution and mixed therewith. As a result, it was found that the ratio of absorbance at 280 nm to that at 460 nm serving as an indicator of the iron-binding properties of lactoferrin was increased in a stepwise manner. This finding indicates that lactoferrin in the concentration compartment solution has normal iron-binding ability. Therefore, it is believed that lactoferrin was extracted without denaturation.

### (Example 2)

The procedure was performed in the same manner as in Example 1, except that the pasteurized milk was replaced by cheese whey (YOTSUBA Inc.). The current was applied to the electrodialysis apparatus. Then, SDS-PAGE was conducted in the same manner as in Example 1 to confirm lactoferrin in the obtained solutions of the respective compartments. As in Example 1, the lactoferrin band and other protein bands were detected in the cheese whey, i.e., the raw material, whereas only the lactoferrin band was detected in the concentration compartment solution. The lactoferrin band was not detected in the anode compartment solution and the cathode compartment solution.

### (Comparative Example 1)

The procedure was performed in the same manner as in Example 1, except that the cation exchange membrane used in Example 1 was replaced by a petroleum-based polymer membrane (CM-1, Tokuyama Corporation), which is a microporous cation exchange membrane. The lactoferrin-containing cow's milk was loaded into the electrodialysis apparatus, and then the current was applied thereto. SDS-PAGE was conducted in the same manner as in Example 1 to confirm lactoferrin in the obtained solutions of the respective compartments. The lactoferrin band was detected only in the raw material loading compartment solution. This indicates that lactoferrin does not permeate the petroleum-based polymer membrane.

The procedure was performed in the same manner as in Example 1, except that the cation exchange membrane used in Example 1 was replaced by a petroleum-based polymer membrane (CM-2, Tokuyama Corporation), which is a microporous cation exchange membrane. The lactoferrin-containing cow's milk was loaded into the electrodialysis apparatus, and then the current was applied thereto. SDS-PAGE was conducted in the same manner as in Example 1 to confirm lactoferrin in the obtained solutions of the respective compartments. As in Comparative Example 1, the lactoferrin band was detected only in the case of the raw material loading compartment solution.

### (Example 3)

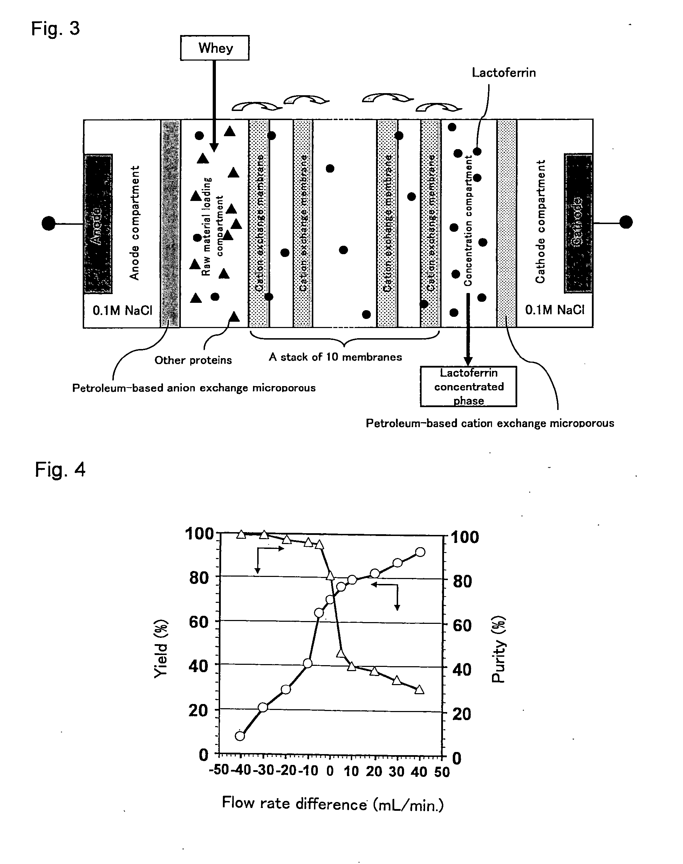

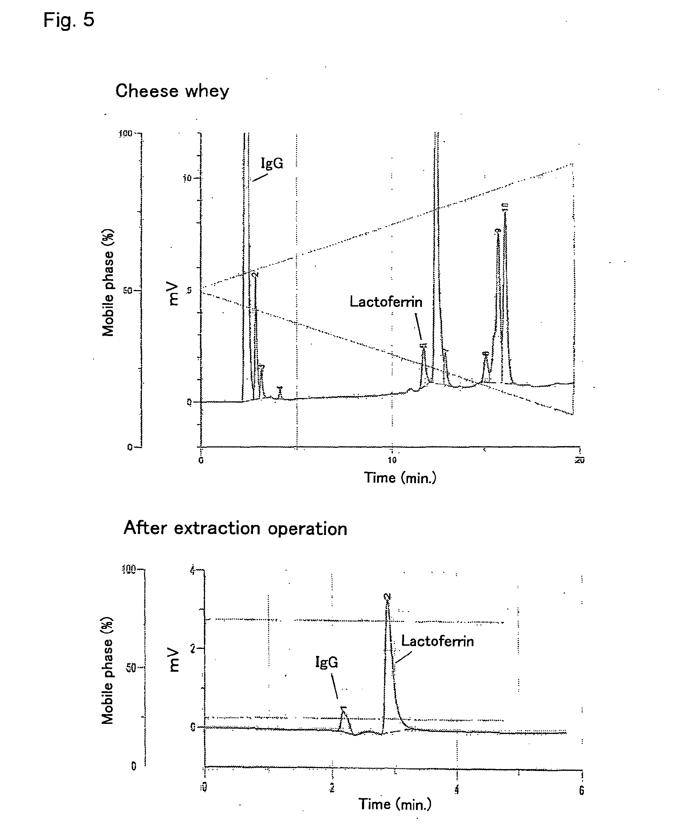

A desktop electrodialyzer (Micro Acilyzer S3; manufactured by ASTOM Corporation) was prepared, and a stack of 10 cation exchange membranes (RX-1; Toray) was inserted between the membrane units of the electrodialyzer (current-carrying area: 55 cm²; effective membrane area: 550 cm²) (see Fig. 3). A 0.1 M NaCl aqueous solution at pH 7 was loaded into the anode compartment, the concentration compartment, and the cathode compartment. Then, 1 L of cheese whey (lactoferrin content: 105 mg/L) was pump-circulated with applying a current so that the current density was 5 mA/cm². On the other hand, the lactoferrin concentrated phase also was circulated with a pump. At this time, a test was conducted by varying the whey flow rate and the lactoferrin concentrated phase flow rate so that the difference therebetween was -50, -40, -30, -20, -10, -5, 0, 5, 10, 20, 30, 40, and 50 mL/minute. Thirty minutes after the operations with these flow rate differences were started, a sample was extracted from the lactoferrin concentrated phase, and lactoferrin in the sample was quantitated by an ELISA method (Quantitation kit; Bethyl Laboratory, TX). The total amount of proteins was determined by Lowry method. The yield (%) was calculated as (the amount of lactoferrin in the lactoferrin concentrated phase) / (the amount of lactoferrin in the whey) x 100, and the purity (%) was calculated as (the amount of lactoferrin in the lactoferrin concentrated phase) / (the total amount of proteins in the lactoferrin concentrated phase) x 100. The results are shown in Fig. 4. At the same time, proteins in the whey and the lactoferrin concentrated phase after the treatment were measured by HPLC, respectively (Fig. 5). The measurement conditions of HPLC were as follows:
Column: CAPCELL PAK C₈ SG300 S5 (Shiseido)
Mobile phase:
   (A) CH₃CN/0.5 M NaCl/trifluoroacetic acid = 50/450/0.15 (v/v/v)
   (B) CH₃CN/0.5 M NaCl/trifluoroacetic acid = 500/450/0.3 (v/v/v) A/B (v/v): 50/50 → 10/90 (20 minutes) gradient
Flow rate: 0.8 mL/minute
Detection: UV detection (280 nm)

As shown in Fig. 4, when (the whey flow rate) - (the lactoferrin concentrated phase flow rate) = 50 mL/minute (the whey flow rate at this time was 1200 mL/minute), which was the condition providing the highest yield, it was found that pressure permeation of proteins other than lactoferrin was caused by the pressure at which the whey was pumped. In all cases where the lactoferrin yield was not less than 90%, the purity was not more than 31%. Thus, the relative flow rate of the lactoferrin concentrated phase was increased so as to prevent the pressure permeation of the proteins. As a result, the yield was decreased to as low as 64%, but the purity was increased to not less than 95%. Moreover, as shown in Fig. 5, also in an analysis by HPLC when the flow rate difference was -5 mL/minute, it was confirmed that lactoferrin with high purity was obtained.

### Industrial Applicability

According to the methods of the present invention, a cationic protein can be separated and purified in a simple manner without denaturation only with a step of performing electrodialysis. The cationic protein, preferably lactoferrin, obtained by the present invention is preferably used as a raw material of food products, pharmaceuticals, cosmetics, and the like.

## Claims

1. A method for separating and purifying a cationic protein using an electrodialysis apparatus,
wherein the electrodialysis apparatus comprises an electrodialysis bath having an anode and a cathode, and the electrodialysis bath comprises an anode compartment, a raw material loading compartment, a concentration compartment, and a cathode compartment in this order from the anode side,
wherein the anode compartment and the raw material loading compartment are divided from each other by a porous membrane made of a polymer having an anion exchange group,
the raw material loading compartment and the concentration compartment are divided from each other by a porous membrane made of a polymer having a cation exchange group, and
the concentration compartment and the cathode compartment are divided from each other by a microporous membrane, and
wherein the method comprises the steps of:
(1) loading a cationic protein-containing aqueous solution into the raw material loading compartment and loading an electrolytic solution into the anode compartment, the concentration compartment, and the cathode compartment;
(2) applying a current to the electrodialysis apparatus; and
(3) collecting a solution containing a cationic protein from the concentration compartment.

2. The method of claim 1, wherein the cationic protein is lactoferrin.

3. The method of claim 1 or 2, wherein the current has a current density of 0.1 to 50 mA/cm².

4. The method of any one of claims 1 to 3, wherein in the step (1), an anion exchanger or a chelating agent is further added to the raw material loading compartment.

5. The method of any one of claims 1 to 4, wherein a face on the raw material loading compartment side of the cation exchange membrane is coated with an anion exchange membrane.
